# EUROPEAN PATENT SPECIFICATION

(11) **EP 2 015 881 B1**
(45) Date of publication and mention of the grant of the patent: **31.05.2017**
(21) Application number: 07734365.5
(22) Date of filing: 23.04.2007
(51) Int. Cl.: B22F 7/06, C22C 26/00, E21B 10/573

(54) **cBN COMPOSITE MATERIAL AND TOOL**
CBN-VERBUNDMATERIAL UND -WERKZEUG
MATÉRIAU COMPOSITE DE NBc ET OUTIL

(30) Priority: 21.04.2006 ZA 200603211
(43) Date of publication of application: 21.01.2009
(73) Proprietor: Element Six Abrasives S.A., 2763 Luxembourg (LU)
(72) Inventor: CAN, Nedret, Sunwardpark, 1459 Boksburg (ZA); AKDOGAN, Guven, 2090 Johannesburg (ZA); HARDEN, Peter, Michael, Nuffield, 1559 Springs (ZA); PRETORIUS, Cornelius, Johannes, Sixmilebridge, Co. Clare (IE)
(74) Representative: Mitchell, Matthew Benedict David
(86) International application number: PCT/IB2007/001046
(87) International publication number: WO 2007/122490

(56) References cited:
- EP-A- 0 411 831
- EP-A- 0 520 403
- EP-A- 0 709 353
- WO-A-2004/040095
- FR-A- 2 498 962

## Description

### BACKGROUND OF THE INVENTION

This invention relates to a tool component and the use thereof, specifically to a tool component with enhanced wear resistance.

Boron nitride exists typically in three crystalline forms, namely cubic boron nitride (cBN), hexagonal boron nitride (hBN) and wurtzitic cubic boron nitride (wBN). Cubic boron nitride is a hard zinc blend form of boron nitride that has a similar structure to that of diamond. In the cBN structure, the bonds that form between the atoms are strong, mainly covalent tetrahedral bonds. Methods for preparing cBN are well known in the art. One such method is subjecting hBN to very high pressures and temperatures, in the presence of a specific catalytic additive material, which may include the alkali metals, alkaline earth metals, lead, tin and nitrides of these metals. When the temperature and pressure are decreased, cBN may be recovered.

cBN has wide commercial application in machining tools and the like. It may be used as an abrasive particle in grinding wheels, cutting tools and the like or bonded to a tool body to form a tool insert using conventional electroplating techniques.

cBN may also be used in bonded form as a cBN compact, also known as PCBN. cBN compacts tend to have good abrasive wear, are thermally stable, have a high thermal conductivity, good impact resistance and have a low coefficient of friction when in contact with a ferrous workpiece.

Diamond is the only known material that is harder than cBN. However, as diamond tends to react with certain materials such as iron, it cannot be used when working with iron containing metals and therefore use of cBN in these instances is preferable.

cBN compacts comprise sintered polycrystalline masses of cBN particles. When the cBN content exceeds 80 percent by volume of the compact, there is a considerable amount of direct cBN-to-cBN contact and bonding. When the cBN content is lower, e.g. in the region of 40 to 60 percent by volume of the compact, then the extent of direct cBN-to-cBN contact and bonding is less.

cBN compacts will generally also contain a binder phase which may be a cBN catalyst or may contain such a catalyst. Examples of suitable binder phases are aluminium, alkali metals, cobalt, nickel, and tungsten.

When the cBN content of the compact is less than 75 percent by volume there is generally present another hard phase, a third phase, which may be ceramic in nature. Examples of suitable ceramic hard phases are nitrides, borides and carbonitrides of a Group IVA or VB transition metal, aluminium oxide, and carbides such as tungsten carbide and mixtures thereof.

cBN compacts may be bonded directly to a tool body in the formation of a tool insert or tool. However, for many applications it is preferable that the compact is bonded to a substrate/support material, forming a supported compact structure, and then the supported compact structure is bonded to a tool body. The substrate/support material is typically a cemented metal carbide that is bonded together with a binder such as cobalt, nickel, iron or a mixture or alloy thereof. The metal carbide particles may comprise tungsten, titanium or tantalum carbide particles or a mixture thereof.

A known method for manufacturing the polycrystalline cBN compacts and supported compact structures involves subjecting an unsintered mass of cBN particles to high temperature and high pressure conditions, i.e. conditions at which the cBN is crystallographically stable, for a suitable time period. A binder phase may be used to enhance the bonding of the particles. Typical conditions of high pressure and temperature (HPHT) which are used are pressures of the order of 2 GPa or higher and temperatures in the region of 1100°C or higher. The time period for maintaining these conditions is typically about 3 to 120 minutes.

The sintered cBN compact, with or without substrate, is often cut into the desired size and/or shape of the particular cutting or drilling tool to be used and then mounted onto a tool body utilising brazing techniques.

The cBN abrasive compacts, although performing acceptably, require continuing improvement in their properties to meet the need for better tool lifetimes and lower costs, and research and development are ongoing to provide such improvements in the marketplace.

cBN abrasive compacts are used in high-speed machining of hard ferrous materials such as die steels, alloy steels and hard-facing materials. The main advantage of high-speed hard turning is the elimination of expensive and time consuming grinding operation to finish the part. cBN abrasive compacts are the most suitable cutting tools for high-speed, hard-turning operations.

In high speed machining of hardened steels increased hardness of the work piece results in higher than usual cutting forces, stresses and temperatures at the cutting zone. In particular wear behaviour of a cBN cutting tool is very sensitive to temperatures developed at the chip-tool and workpiece tool interfaces. Elevated temperatures at the chip-tool interface causes accelerated wear mainly by chemical wear leading to a deep crater formation on the rake face of the tool. This results in formation of a sharpened cutting edge which is prone to chipping or fracture. In most cases the deep crater breaks the cutting edge with continuous wear, leading to a catastrophic failure of the cutting tool by edge chipping.

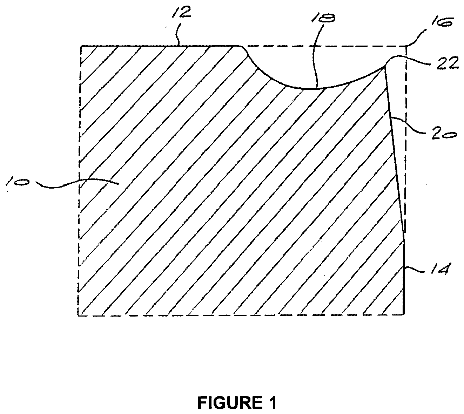

This is illustrated by the attached Figure 1. Referring to Figure 1, a tool component comprises a layer 10 of polycrystalline cBN material which has a rake (working) surface 12 and a flank surface 14. The cutting edge of the tool component, prior to use, is the edge 16. During use, a deep crater 18 forms and the flank surface 14 wears to form surface 20. Sharpened cutting edge 22 results.

In industry there is a drive towards ever increasing cutting speeds to improve throughput and productivity and hence severe crater wear formation is one of the biggest factors affecting the overall performance of cBN abrasive compact cutting tool and machining economics. Therefore, it is expected that any reduction in crater wear will not only result in longer tool life but also it will give the tool opportunity to be used at a higher cutting speed.

EP 102843 describes the use of a thin, wear-resistant refractory layer bonded to a PCBN tool insert where the cBN content is in excess of 70 vol%. The refractory layer is preferably titanium nitride or carbide, or a mixture thereof, and is typically less than 20 microns thick. It is applied after the PCBN tool is sintered and processed using a method such as CVD. High cBN PCBN is used in applications like turning or milling, which require a high degree of abrasion resistance. These applications are carried out at lower speeds (i.e. the tool does not get as hot) and the cBN is not compromised by exposure to chemically aggressive systems at high temperatures. By contrast, low cBN tools are used in high tool speed applications where failure due to crater wear is a major problem. High cBN content PCBN does not perform sufficiently well in these high speed, chemically demanding applications, because of a lack of chemical resistance. Whilst high cBN content PCBN may experience some degree of crater wear in their standard applications, it is never the dominant failure mode, as is the case with the low cBN materials.

EP 0520403 describes a cutting tool having two layers of hard sintered compact of cBN. EP 0709353 describes a hard composite material for a tool comprising a substrate of cBN sintered body containing more than 20% by volume of cubic boron nitride or diamond sintered body containing more than 40% by volume of diamond, the substrate having a hard heat-resistant film.

### SUMMARY OF THE INVENTION

According to the present invention, there is provided a tool component comprising a first layer of polycrystalline cBN material which has a rake (working) surface and a flank surface and comprising between 35 vol% and 70 vol% cBN and a binder; and a secondary layer across the rake surface or at least partially across the rake surface and comprising a refractory material and cBN, wherein the secondary layer has a higher resistance to crater formation than the first layer of cBN material, the secondary layer comprising cBN and a binder, and wherein the cBN in the secondary layer is present in an amount of at least 10 vol% less than that of the first layer, the refractory material being selected from a carbide, boride, nitride, carbonitride, oxide, or silicide of a metal selected from Group 4, 5 or 6 or from aluminium or silicon, or a mixture and/or solid solution thereof.

The secondary layer preferably extends across the rake surface up to or close to a cutting edge on that surface. Secondary layer thickness is typically in the range of 30 µm to 300 µm and may be adjusted in such a way that the secondary layer predominantly forms the rake face of the cutting tool extending close to the cutting edge whereas the first layer forms the flank face of the tool component.

The secondary layer may be formed of at least two different layers with different compositions. The thickness of each such layer in the secondary layer is typically in the range of 30 µm to 300 µm.

The first layer and secondary layer may be metallurgically bonded to each other during high pressure and high temperature (HPHT) sintering or they may be metallurgically bonded or formed during a subsequent typically lower pressure sintering process such as HIPing, gas pressure phase sintering, microwave sintering, spark plasma sintering or laser sintering or a combination of these processes. Typical conditions of high pressure and temperature (HPHT) which are used are temperatures in the region of 1100°C or higher and pressures of the order of 2 GPa or higher. The time period for maintaining these conditions is typically about 3 to 120 minutes. The cBN composite layer may be bonded to a substrate material such as cemented tungsten carbide or a cermet type of material.

The first layer of polycrystalline cBN material preferably comprises less than 65 vol% cBN, and most preferably 40 to 60 vol% cBN.

The first layer of polycrystalline cBN material typically has a thickness range from about 300 µm to 2000 µm, most preferably from about 500 µm to 1000 µm.

The secondary layer will typically contain ceramic (refractory) materials that have lower affinity towards iron than cBN. It is most preferable that the secondary layer contains at least one refractory phase selected from carbides, borides, nitrides, carbonitrides, oxides and/or suicides of metals in Group 4, 5, 6 or aluminium or silicon, and mixtures and/or solid solutions thereof.

In addition, the secondary layer will typically contain a binder matrix or phase containing elements selected from the transition metals (such as iron, cobalt and nickel), yttrium, titanium, aluminium and silicon.

This binder phase will typically comprise less than 20 volume percent of the secondary layer.

In the tool component of the invention, the secondary layer performs the function of increasing the crater resistance of the rake face. Although the secondary layer may, initially, also perform some cutting or abrading action in use, the primary cutting edge of the tool component is provided by the first polycrystalline cBN layer. Such cutting edge is the edge defined between the rake face and the flank surface or face of the first polycrystalline cBN layer.

The tool component of the invention further has particular application in the machining, particularly the high speed machining, of hard ferrous materials such as die steels, alloy steels and other hard facing materials. Hard
ferrous materials have a Rockwell C Hardness of greater than 45 and typically 55 to 65. Thus, the invention provides, according to another aspect, the use of a tool component as described above in the machining, particularly high speed machining, of hard ferrous materials.

### DETAILED DESCRIPTION OF PREFERRED EMBODIMENTS

The present invention relates to a tool component having a layer of polycrystalline cBN material predominantly forming the flank face of the tool component and across the (rake) working face or at least partially across the (rake) working face of the tool component is a secondary layer comprising a refractory material and typically another binder phase which can be selected from elements of, or compounds containing, silicon, nickel, aluminium, cobalt, titanium, yttrium and iron and mixtures or solid solutions thereof and optionally cBN. The secondary layer is preferably metallurgically bonded to the first layer and predominantly forms the rake face of the tool component.

The secondary layer forms a wear resistant top layer that has a higher resistance to crater formation than that of the first layer. The secondary layer may form a layer on the entire rake face of the tool component or only part thereof.

The secondary layer may be metallurgically bonded to the (rake) working face of the first layer.

The first layer of polycrystalline cBN material may be bonded to a substrate material such as cemented tungsten carbide or a cermet type of material.

The tool component of the invention may be produced by placing the secondary layer onto the (rake) working face of a layer of polycrystalline material and sintering at high temperature and high pressure conditions at which the cBN is crystallographically stable, for a suitable time period or it may be metallurgically bonded or formed by a subsequent sintering process, such as HIPing, gas pressure sintering, microwave sintering, spark plasma sintering or laser sintering.

Alternatively, the secondary layer may be formed through an in situ interaction of the first layer of cBN material with an appropriate canister or encapsulating material. During this in situ brazing or metallurgical bonding step, an additional metallic layer may be introduced between the first layer of cBN material and the secondary layer. The metallic layer may be selected from a group including copper, silver, zinc, cobalt and nickel, and alloys containing these metals.

In this form of the invention, the secondary layer is produced by interaction between the first layer of cBN material and an encapsulating or canister material used during sintering. The canister is typically a metal, such as titanium. The reaction between the cBN material and the canister material(s) will form a refractory layer that provides a higher resistance to crater formation than that of the first layer alone. The reaction layer forms by short range diffusion from the interface zone between the cBN material and the canister material(s), to a thickness of approximately 20 to 50 microns. After grinding to remove the majority of the unreacted canister material, the secondary layer will be present, providing a protective region as previously described. In the case of a canister metal such as titanium, this secondary layer will contain refractory titanium compounds such as titanium boride and titanium nitride. The canister material may additionally be selected to contain further alloying element or elements which may facilitate the formation of an appropriate binder phase for the refractory material. Examples of suitable elements are nickel and cobalt. These may persist in the metallic form within the final sintered product.

The thickness of the secondary layer is controlled in such a way that the secondary layer generally does not extend to the flank of the tool component and forms the rake face.

According to another aspect of the invention, a tool component comprises a layer of polycrystalline cBN material predominantly forming a flank face of the tool component and across a (rake) working face or at least partially across the (rake) working face of the tool component is a secondary layer comprising of at least two layers with different compositions of refractory materials and another phase which can be selected from elements of, and compounds containing, one or more of silicon, nickel, aluminium, cobalt, titanium and iron and mixtures or solid solutions thereof and optionally cBN. The secondary layer is formed by alternating at least two thinner layers with different compositions which are metallurgically bonded together during sintering. The secondary layer may be metallurgically bonded to the first layer and predominantly forms the rake face of the tool component. The first layer predominantly forms the flank face of the tool component.

The secondary layer forms a wear resistant top layer that has a higher resistance to crater formation than that of the first layer. Alternating layers within the secondary layer may be arranged in such a way that they provide an optimum metallurgical bond to the first layer by reducing thermal mismatch and also provide resistance to crater wear.

The secondary layer may form the rake face of the tool component. The first layer of polycrystalline cBN material may be bonded to a substrate material such as cemented tungsten carbide or a cermet type of material.

The tool component of the invention may be produced by placing various thin layers of different chemical composition on top of each other to form the secondary layer during sintering at high temperature and high pressure conditions at which the cBN is crystallographically stable, for a suitable time period or it may be metallurgically bonded or formed by a subsequent sintering process, such as HIPing, gas pressure sintering, microwave sintering, spark plasma sintering or laser sintering, or a combination of these processes. Alternatively, the secondary layer may be formed through an in situ brazing or metallurgical bonding reaction of the first layer of cBN material with an appropriate metal canister or layer. The thickness of the secondary layer, constituted by at least two different layers, is controlled in such a way that the secondary layer generally does not extend to the flank of the tool component and forms the rake face.

In use, crater wear forms largely in the secondary layer and flank wear forms in the first polycrystalline cBN layer. Cutting tool life is extended as a result of higher crater wear resistance of the secondary layer than the first layer during hardened steel machining, for example. Relatively higher crater wear resistance of the second layer in relation to the first layer delays the amount of crater wear formed and thereby extends the cutting tool life in high-speed, hard-turning applications.

The net result is that the cBN composite tool component has a longer cutting tool life or can operate at higher cutting speeds in finish machining of hardened steel than the equivalent cBN composite material that does not contain a secondary layer.

The tool component of the invention is typically used in high speed finish cutting of hard ferrous materials such as die steels, alloy steels and hard- facing materials.

The invention will now be described in more detail with reference to the following non-limiting examples, in which Materials 1 B, 1 E and 1 F are provided as examples with no cBN in the secondary layer.

### Example 1

### Material-1 A

A sub-stoichiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 1.4 micron average particle size of cBN was added and attrition milled in hexane for an hour. The cBN was added in an amount such that the total volume percentage of calculated cBN in the mixture was about 60 percent. The slurry was dried under vacuum and formed into a green compact, which was supported by a tungsten carbide hard metal. After encapsulation, the unit was sintered at 55 kbar (5.5GPa) and at a temperature around 1300°C.

### Material-1B

A sub-stochiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 1.4 micron average particle size of cBN was added and attrition milled in hexane for an hour. The cBN was added in an amount such that the total volume percentage of calculated cBN in the mixture was about 60 percent. The slurry was dried under vacuum and formed into a green compact.

A powder mixture containing about 89 vol% TiC_{0.8}, and equal volume percentage of Al and Ni, was milled and mixed in an attritor mill and dried. A binder, PMMA (poly methyl methacylate), a plastisizer, DBP (dibutyl phthalate) of equal volume percentages were added into a container together with 50 vol% of total volume of the solvent material, containing 70 vol% methyl ethyl ketone and 30 vol% ethanol. The mixture was stirred at high speeds and then a powder mixture, containing TiC_{0.8}, Al and Ni, was added gradually into the liquid mixture to achieve a consistent viscosity that is suitable for tape casting. The mixed slurry was poured into a Dr. Blade set up and a thin layer (about 100 micron in thickness) of ceramic tape was cast and dried. After drying, layers of ceramic tape were placed on top of the already formed green compact. After encapsulation, the unit was sintered at 55 kbar (5.5GPa) and at a temperature around 1300°C.

### Material-1C

A sub-stochiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 1.4 micron average particle size of cBN was added and attrition milled in hexane for an hour. The cBN was added in an amount such that the total volume percentage of calculated cBN in the mixture was about 60 percent. The slurry was dried under vacuum and formed into a green compact.

A powder mixture containing about 63.5 vol% TiC_{0.8}, 30 vol% cBN, 2.6 vol% Al and 3.9 vol% of Ni was milled and mixed in an attritor mill and dried. A binder, PMMA (poly methyl methacylate), a plastisizer, DBP (dibutyl phthalate) of equal volume percentages were added into a container together with 50 vol% of total volume of the solvent material, containing 70 vol% methyl ethyl ketone and 30 vol% ethanol. The mixture was stirred at high speeds and then the powder mixture, containing TiC_{0.8}, cBN, Al and Ni, was added gradually into the liquid mixture to achieve a consistent viscosity that is suitable for tape casting. The mixed slurry was poured into a Dr. Blade set up and a thin layer (about 100 micron in thickness) of ceramic tape was cast and dried. After drying, layers of ceramic tape were placed on top of the already formed green compact. After encapsulation, the unit was sintered at 55 kbar (5.5GPa) and at a temperature around 1300°C.

### Material-1D

A sub-stochiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 1.4 micron average particle size of cBN was added and attrition milled in hexane for an hour. The cBN was added in an amount such that the total volume percentage of calculated cBN in the mixture was about 60 percent. The slurry was dried under vacuum and formed into a green compact.

A powder mixture containing about 46.9 vol% TiN_{0.8}, 46 vol% cBN, 3.1 vol% Ni and 4 vol% Al was milled and mixed in an attritor mill and dried. A binder, PMMA (poly methyl methacylate), a plastisizer, DBP (dibutyl phthalate) of equal volume percentages were added into a container together with 50 vol% of total volume of the solvent material, containing 70 vol% methyl ethyl ketone and 30 vol% ethanol. The mixture was stirred at high speeds and then a powder mixture, containing TiN_{0.8}, cBN, Al and Ni, was added gradually into the liquid mixture to achieve a consistent viscosity that is suitable for tape casting. The mixed slurry was poured into a Dr. Blade set up and a thin layer (about 100 micron in thickness) of ceramic tape was cast and dried. After drying, layers of ceramic tape were placed on top of the already formed green compact. After encapsulation, the unit was sintered at 55 kbar (5.5GPa) and at a temperature around 1300°C.

### Material-1E

A sub-stochiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 1.4 micron average particle size of cBN was added and attrition milled in hexane for an hour. The cBN was added in an amount such that the total volume percentage of calculated cBN in the mixture was about 60 percent. The slurry was dried under vacuum and formed into a green compact.

A powder mixture containing about 90.7 vol% Ti(C_{0.7}N_{0.3})_{0.3}. 4.6 vol% Ni and 4.7 vol% Al was milled and mixed in an attritor mill and dried. A binder, PMMA (poly methyl methacylate), a plastisizer, DBP (dibutyl phthalate) of equal volume percentages were added into a container together with 50 vol% of total volume of the solvent material, containing 70 vol% methyl ethyl ketone and 30 vol% ethanol. The mixture was stirred at high speeds and then a powder mixture, containing Ti(C_{0.7}N_{0.3})_{0.8}, Ni and Al, was added gradually into the liquid mixture to achieve a consistent viscosity that is suitable for tape casting. The mixed slurry was poured into a Dr. Blade set up and a thin layer (about 100 micron in thickness) of ceramic tape was cast and dried. After drying, layers of ceramic tape were placed on top of the already formed green compact. After encapsulation, the unit was sintered at 55 kbar (5.5GPa) and at a temperature around 1300°C.

### Material-1F

A sub-stochiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 1.4 micron average particle size of cBN was added and attrition milled in hexane for an hour. The cBN was added in an amount such that the total volume percentage of calculated cBN in the mixture was about 60 percent. The slurry was dried under vacuum and formed into a green compact.

A powder mixture containing about 31.5 vol% TiN_{0.8}. 61.7 vol% ZrO₂, 1.4 vol% Al₂O₃ and 5.5 vol% Y₂O₃ was milled and mixed in an attritor mill and dried. A binder, PMMA (poly methyl methacylate), a plastisizer, DBP (dibutyl phthalate) of equal volume percentages were added into a container together with 50 vol% of total volume of the solvent material, containing 70 vol% methyl ethyl ketone and 30 vol% ethanol. The mixture was stirred at high speeds and then a powder mixture, containing TiN_{0.8}, ZrO₂, Al₂O₃ and Y₂O₃, was added gradually into the liquid mixture to achieve a consistent viscosity that is suitable for tape casting. The mixed slurry was poured into a Dr. Blade set up and a thin layer (about 100 micron in thickness) of ceramic tape was cast and dried. After drying, layers of ceramic tape were placed on top of the already formed green compact. After encapsulation, the unit was sintered at 55 kbar (5.5GPa) and at a temperature around 1300°C.

The sintered materials, Material-1A to Material-1F, were processed using conventional grinding, lapping techniques, and EDM (Electron Discharge Machining) cutting. Cutting tool inserts from Material-1A to Material-1F were prepared according to the ISO standard insert geometry of SNMN090308 S0220. The cutting tools from Material-1B to Material-1F contained a second layer ceramic material of about 80 µm in thickness, and a first layer of cBN material of about 0.8 mm thickness supported by a tungsten carbide hard metal. In Materials-1B to -1 F the second layer was bonded to the rake face of the first layer. There was no second layer ceramic material present on the rake face of Material-1A, and the rake face consisted exclusively of a layer of cBN material.

A machining test was carried out on the tool components prepared as described above. The workpiece, SAE4340 steel, was continuously machined using cutting speed of 250 m/min with the depth of cut of 0.2 mm and the feed rate of 0.1 mm/rev.

The cutting test was continued until the cutting edge failed by edge chipping and total cutting distance was measured as an indication of cutting tool performance. All of the tools failed as a result of deep crater formation leading to cutting edge chipping and none of the tested tools failed as a result of excessive flank wear. Therefore, it is expected that materials with higher resistance to cratering according to the invention will have a longer tool life or higher performance. The results are summarized in Table 1. The tool life measurements are normally from averages of 3 or more measurements.

**Table 1: Total cutting tool life, expressed as sliding distance in metres of all the listed materials in Example 1.**

| Materials | Total Sliding distance (m) |
|---|---|
| Material-1A | 2954 |
| Material-1B | 5018 |
| Material-1C | 5006 |
| Material-1D | 3958 |
| Material-1E | 6420 |
| Material-1F | 3716 |

It is clear that tool life is surprisingly improved by the presence of a secondary ceramic layer in reducing overall crater wear. The tool life in the case of Material-1 E is more than doubled and around 25% improvement for Material-1F in relation to the performance of Material-1A, a prior art material.

### Example 2

### Material-2A

A sub-stochiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 2 micron average particle size of cBN was added and attrition milled in hexane for an hour. The cBN was added in an amount such that the total volume percentage of calculated cBN in the mixture was about 60 percent. The slurry was dried under vacuum and formed into a green compact, which was supported by a tungsten carbide hard metal. After encapsulation, the unit was sintered at 55 kbar (5.5GPa) and at a temperature around 1300°C.

### Material-2B

A sub-stochiometric titanium carbonitride powder, Ti(C_{0.7}N_{0.3})_{0.8} of average particle size of 1.4 micron was mixed with Al powder, average particle size of 5 micron, using a tubular mixer. The mass ratio between Ti(C_{0.7}N_{0.3})_{0.8} and Al was 90:10. The powder mixture was pressed into a titanium cup to form a green compact and heated to 1025°C under vacuum for 30 minutes and then crushed and pulverized. The powder mixture was then attrition milled for 4 hours and then 2 micron average particle size of cBN was added and attrition milled in hexane for an hour. The cBN was added in an amount such that the total volume percentage of calculated cBN in the mixture was about 60 percent. The slurry was dried under vacuum and formed into a green compact.

A powder mixture containing about 45 vol% TiN_{0.8}, 50 vol% cBN, 2.5 vol% Al and 2.5 vol% of Ni was milled and mixed in an attritor mill and dried. A binder, PMMA (poly methyl methacylate), a plastisizer, DBP (dibutyl phthalate) of equal volume percentages were added into a container together with 50 vol% of total volume of the solvent material, containing 70 vol% methyl ethyl ketone and 30 vol% ethanol. The mixture was stirred at high speeds and then the powder mixture, containing TiN_{0.8}, cBN, Al and Ni, was added gradually into the liquid mixture to achieve a consistent viscosity that is suitable for tape casting. The mixed slurry was poured into a Dr. Blade set up and a thin layer (about 100 micron in thickness) of ceramic tape was cast and dried. After drying, layers of ceramic tape were placed on top of the already formed green compact. After encapsulation, the unit was sintered at 55 kbar (5.5GPa) and at a temperature around 1300°C.

The sintered materials, Material-2A and Material-2B, were processed using conventional grinding, lapping techniques, and EDM (Electron Discharge Machining) cutting. Cutting tool inserts from Material-2A and Material-2B were prepared according to the ISO standard insert geometry of SNMN090308 S0220. The cutting tools from Material-2B contained a second layer ceramic material of about 80 µm in thickness and a first layer of cBN material of about 0.8 mm thickness supported by a tungsten carbide hard metal. In Material-2B the second layer was bonded to the rake face of the first layer. There was no second layer ceramic material present on the rake face of Material-2A, and the rake face consisted exclusively of a layer of cBN material.

A machining test was carried out on the tool components prepared as described above. The workpiece, SAE4340 steel, was continuously machined using cutting speed of 250m/min with the depth of cut of 0.2mm and the feed rate of 0.1 mm/rev.

The cutting test was continued until the cutting edge failed by edge chipping and total cutting distance was measured as an indication of cutting tool performance. All of the tools failed as a result of deep crater formation leading to cutting edge chipping and none of the tested tools failed as a result of excessive flank wear. Therefore, it is expected that materials with higher resistance to cratering according to the invention will have a longer tool life or higher performance. The results are summarized in Table 2. The tool life measurements are normally from averages of 3 or more measurements.

**Table 2: Total cutting tool life, expressed as sliding distance in metres of all the listed materials in Example 2.**

| Materials | Sliding distance (m) |
|---|---|
| Material- 2A | 2513 |
| Material- 2B | 2943 |

The tool life is significantly improved by the presence of a secondary ceramic layer in reducing overall crater wear. The tool life in the case of Material-2B is significantly more than the performance of Material-2A, a prior art material.

## Claims

1. A tool component comprising a first layer of polycrystalline cBN material which has a rake (working) surface and a flank surface and comprising between 35 vol% and 70 vol% cBN and a binder; and a secondary layer across the rake surface or at least partially across the rake surface and comprising a refractory material wherein the secondary layer has a higher resistance to crater formation than the first layer of cBN material, and **characterised in that** the secondary layer comprises cBN and a binder, wherein the cBN in the secondary layer is present in an amount of at least 10 vol% less than that of the first layer, the refractory material being selected from a carbide, boride, nitride, carbonitride, oxide, or silicide of a metal selected from Group 4, 5 or 6 or from aluminium or silicon, or a mixture and/or solid solution thereof.

2. A tool component according to claim 1 wherein the secondary layer has a lower affinity towards iron than cBN.

3. A tool component according to claim 1 wherein the binder phase of the secondary layer is selected from the elements of, or compounds containing, silicon, nickel, aluminium, cobalt, titanium, yttrium and iron.

4. A tool component according to claim 3, wherein the binder phase is present in an amount of less than 20 volume percentage of the secondary layer.

5. A tool component according to any one of the preceding claims wherein the secondary layer extends across the rake surface up to or close to a cutting edge on that surface.

6. A tool component according to any one of the preceding claims wherein the secondary layer thickness is in the range of 30 µm to 300 µm.

7. A tool component according to any one of the preceding claims wherein the secondary layer is formed of at least two different layers with different compositions, wherein the thickness of each layer in the secondary layer is in the range of 30 µm to 300 µm.

8. A tool component according to any one of the preceding claims wherein the first layer is bonded to a substrate material, wherein the substrate is preferably made of cemented carbide or a cermet type of material.

9. A tool component according to any one of the preceding claims wherein the first layer of polycrystalline cBN material comprises no more than 65 vol% cBN, preferably between 40 and 60 vol% cBN.

10. A tool component according to any one of the preceding claims wherein the first layer of polycrystalline cBN material contains another hard phase.

11. A tool component according to any one of the preceding claims wherein the first layer of polycrystalline cBN material has a thickness range from 300 µm to 2000 µm, preferably from 500 µm to 1000 µm.

12. A cutting tool comprising at least one tool component according to any one of the preceding claims.

## Patentansprüche

1. Werkzeugkomponente, die eine erste Schicht aus polykristallinem cBN-Material, die eine Spanfläche (Arbeitsfläche) und eine Flankenfläche aufweist und zwischen 35 Vol.% und 70 Vol.% cBN und ein Bindemittel umfasst; und eine Sekundärschicht über der Spanfläche oder mindestens teilweise über der Spanfläche umfasst, und die ein hitzebeständiges Material umfasst, wobei die Sekundärschicht eine höhere Widerstandsfähigkeit gegen Kraterbildung als die erste Schicht aus cBN-Material aufweist, **dadurch gekennzeichnet, dass** die Sekundärschicht cBN und ein Bindemittel umfasst, wobei das cBN in der Sekundärschicht in einer Menge von mindestens 10 Vol.% weniger als die Menge in der ersten Schicht vorhanden ist, wobei das hitzebeständige Material ausgewählt ist aus einem Carbid, Borid, Nitrid, Carbonitrid, Oxid oder Silicid eines Metalls ausgewählt aus Gruppe 4, 5 oder 6 oder aus Aluminium oder Silicium, oder einer Mischung und/oder festen Lösung davon.

2. Werkzeugkomponente nach Anspruch 1, bei der die Sekundärschicht eine geringere Affinität zu Eisen als cBN aufweist.

3. Werkzeugkomponente nach Anspruch 1, bei der die Bindemittelphase der Sekundärschicht ausgewählt ist aus den Elementen Silicium, Nickel, Aluminium, Kobalt, Titan, Yttrium und Eisen oder Verbindungen, die diese enthalten.

4. Werkzeugkomponente nach Anspruch 3, bei der die Bindemittelphase in einer Menge von weniger als 20 Volumenprozent der Sekundärschicht vorhanden ist.

5. Werkzeugkomponente nach einem der vorhergehenden Ansprüche, bei der sich die Sekundärschicht über die Spanfläche bis zu einer oder nahe an eine Schneidkante an dieser Fläche erstreckt.

6. Werkzeugkomponente nach einem der vorhergehenden Ansprüche, bei der die Dicke der Sekundärschicht im Bereich von 30 µm bis 300 µm liegt.

7. Werkzeugkomponente nach einem der vorhergehenden Ansprüche, bei der die Sekundärschicht aus mindestens zwei unterschiedlichen Schichten mit unterschiedlichen Zusammensetzungen gebildet ist, wobei die Dicke jeder Schicht in der Sekundärschicht im Bereich von 30 µm bis 300 µm liegt.

8. Werkzeugkomponente nach einem der vorhergehenden Ansprüche, bei der die erste Schicht an ein Substratmaterial gebunden ist, wobei das Substrat vorzugsweise aus zementiertem Carbid oder Material vom Cermettyp gefertigt ist.

9. Werkzeugkomponente nach einem der vorhergehenden Ansprüche, bei der die erste Schicht aus polykristallinem cBN-Material nicht mehr als 65 Vol.% cBN, vorzugsweise zwischen 40 und 60 Vol.% cBN umfasst.

10. Werkzeugkomponente nach einem der vorhergehenden Ansprüche, bei der die erste Schicht aus polykristallinem cBN-Material eine weitere Hartphase enthält.

11. Werkzeugkomponente nach einem der vorhergehenden Ansprüche, bei der die erste Schicht aus polykristallinem cBN-Material eine Dicke im Bereich von 300 µm bis 2000 µm, vorzugsweise 500 µm bis 1000 µm aufweist.

12. Schneidwerkzeug, das mindestens eine Werkzeugkomponente gemäß einem der vorhergehenden Ansprüche umfasst.

## Revendications

1. Composant d'outil comprenant une première couche de matériau de cBN polycristallin qui a une surface de coupe (travail) et une surface de flanc et comprenant entre 35 % en volume et 70 % en volume de cBN et un liant ; et une couche secondaire sur la surface de coupe ou au moins partiellement sur la surface de coupe et comprenant un matériau réfractaire dans lequel la couche secondaire a une résistance à la formation de cratères plus élevée que la première couche de matériau de cBN, et **caractérisé en ce que** la couche secondaire comprend du cBN et un liant, dans lequel le cBN de la couche secondaire est présent en une quantité inférieure d'au moins 10 % en volume à celle de la première couche, le matériau réfractaire étant choisi parmi un carbure, un borure, un nitrure, un carbonitrure, un oxyde ou un siliciure d'un métal choisi parmi les Groupes 4, 5 ou 6 ou parmi l'aluminium ou le silicium, ou un mélange et/ou une solution solide de ceux-ci.

2. Composant d'outil selon la revendication 1 dans lequel la couche secondaire a une affinité plus faible vis-à-vis du fer que vis-à-vis du cBN.

3. Composant d'outil selon la revendication 1 dans lequel la phase de liant de la couche secondaire est choisie parmi les éléments de silicium, de nickel, d'aluminium, de cobalt, de titane, d'yttrium et de fer, ou les composés contenant ces éléments.

4. Composant d'outil selon la revendication 3, dans lequel la phase de liant est présente en une quantité inférieure à 20 pour cent en volume de la couche secondaire.

5. Composant d'outil selon l'une quelconque des revendications précédentes dans lequel la couche secondaire s'étend sur la surface de coupe jusqu'à une arête tranchante ou près d'une arête tranchante sur cette surface.

6. Composant d'outil selon l'une quelconque des revendications précédentes dans lequel l'épaisseur de la couche secondaire se situe dans la plage de 30 µm à 300 µm.

7. Composant d'outil selon l'une quelconque des revendications précédentes dans lequel la couche secondaire est constituée d'au moins deux couches différentes ayant différentes compositions, dans lequel l'épaisseur de chaque couche de la couche secondaire se situe dans la plage de 30 µm à 300 µm.

8. Composant d'outil selon l'une quelconque des revendications précédentes dans lequel la première couche est reliée à un matériau de substrat, dans lequel le substrat est de préférence constitué de carbure cimenté ou d'un matériau de type cermet.

9. Composant d'outil selon l'une quelconque des revendications précédentes dans lequel la première couche de matériau de cBN polycristallin ne comprend pas plus de 65 % en volume de cBN, et comprend de préférence entre 40 et 60 % en volume de cBN.

10. Composant d'outil selon l'une quelconque des revendications précédentes dans lequel la première couche de matériau de cBN polycristallin contient une autre phase dure.

11. Composant d'outil selon l'une quelconque des revendications précédentes dans lequel la première couche de matériau de cBN polycristallin a une plage d'épaisseur de 300 µm à 2 000 µm, de préférence de 500 µm à 1 000 µm.

12. Outil de coupe comprenant au moins un composant d'outil selon l'une quelconque des revendications précédentes.
